# EUROPEAN PATENT APPLICATION

(11) **EP 4 765 741 A1**
(43) Date of publication of application: **24.06.2026**
(21) Application number: 25218654.9
(22) Date of filing: 26.11.2025
(51) Int. Cl.: H04L 12/18

(54) **METHOD AND SYSTEM FOR ENHANCED INFORMATION BROADCASTING**

(30) Priority: 23.12.2024 US 202419000644
(71) Applicant: Mitel Networks Corporation, Ottawa, Ontario K2K 3K1 (CA)
(72) Inventor: TSIATSIKAS, Zisis, Thessaloniki (GR); TSOKANA, Sofia, Kanata (CA)
(74) Representative: McDougall, James

(57) **Abstract**

A method and a system for enhanced information broadcasting are disclosed. A method according to the present invention may leverage artificial intelligence (AI) to convert spoken words into video clips in real time. The duration of these clips may be designed to be flexible, even in a customizable manner: long enough to capture the essence of the content being presented, yet short enough to maintain the natural flow of the conversation. Thus, the present invention offers tailored video content to meet real time needs of meeting participants by adapting to individual roles, priorities, and even calendar availability. The present invention dynamically segments and adjusts content based on user focus areas, job role and engagement levels, creating more relevant, role-specific visualizations. Additionally, the present invention offers interactivity during meetings in a way that users can request, modify, or view content in alternative formats.

## Description

### FIELD OF DISCLOSURE

The present invention relates to a method for enhanced information broadcasting and a system to perform the method.

### BACKGROUND OF THE DISCLOSURE

During communication sessions, it is often necessary to visualize aspects to better explain a topic. Traditional calling systems in the art typically offer two approaches for visualization: screen sharing or employing the user's camera. By screen sharing, the presenter can easily display relevant content, while in the second approach, participants can observe the presenter's expressions, which helps them grasp the subject matter more effectively.

However, there are some drawbacks to the approaches used in the art. Sensitive or private information (e.g., emails, passwords, or personal files) may be displayed unintentionally during screen sharing. In addition, screen sharing consumes significant internet bandwidth, which can result in lags or reduced quality, especially in low-speed internet environments. In many cases, only the presenter controls what is displayed, which may not align with the participants' specific needs or interests. If the presenter navigates quickly or doesn't clearly explain, viewers might struggle to keep up.

Regarding the approach to use the presenter's camera, there might be a problem with limited visual quality, i.e., the camera may have a lower quality, or poor lighting may make it difficult for viewers to see clearly. Further, there might be no stable or well-placed camera installed on the device, or the internet connection may be poor; thus, lags or frozen frames might be introduced, which makes it hard for viewers to follow along.

In addition, real time needs of meeting participants by adapting to the roles of the individual participants, priorities, and even calendar availability are not met by the prior art. Also, no adaptation to different formats of visualizations when viewing on various devices with different resolution capabilities is addressed in the prior art.

Thus, there is a need in the art to overcome the drawbacks of the state of the art and provide an approach for information broadcasting to convert spoken words into video clips in real time to enhance the understanding of the participants and to improve the user's experience.

Any discussion, including discussion of problems and solutions, set forth in this section, has been included in this disclosure solely for the purpose of providing a context for the present disclosure, and should not be taken as an admission that any or all of the discussion was known at the time the invention was made or otherwise constitutes prior art.

### SUMMARY OF THE DISCLOSURE

Therefore, the present invention is based on the object to provide a method to enhance information broadcasting and a corresponding system which is configured to perform the inventive method.

In particular, a method and a system for enhanced information broadcasting in communication sessions is provided, wherein video clips from text are generated during a meeting. The text is generated by performing speech-to-text (STT) transcription, also known as automatic speech recognition, of the discussion context of the meeting. Content is dynamically segmented and adjusted based on user focus area, job role and engagement levels, providing more relevant, role-specific visualizations.

This object can be solved by a method described herein and/or a system having features as described herein. Preferred embodiments of the invention are described below.

In the meaning of the present invention, the term "communication session" refers to a remote electronic meeting where participants communicate and collaborate from different physical locations through digital or telecommunication means.

In the meaning of the present invention, the terms "user" and "participant" are used interchangeably throughout the present description to refer to an individual who attends a communication session.

In the meaning of the present invention, the terms "host" and "presenter" are used interchangeably throughout the present description to refer to an individual who organizes, schedules, and manages a communication session. They share content and lead the discussion of a meeting.

In the meaning of the present invention, the term "STT transcription" refers to a function that enables a program to process human speech in a written format. It involves the use of technology like Machine Learning (ML) or Artificial Intelligence (AI) to process human speech into readable text.

In the meaning of the present invention, the terms "visualization", "video", "video clip", "video stream" and "content" are used interchangeably throughout the present description to refer to visual representations of information, data, or concepts in a sequence of visual images.

In the meaning of the present invention, the term "generative video broadcasting" refers to a process in which dynamic, Al-driven content is created and streamed in real time or near-real time.

In the meaning of the present invention, the term "client" refers to a software application running on the participants' devices or hardware device of the participants that communicates with a server to access resources, data, or services.

In the meaning of the present invention, the steps of requesting and retrieving selection information may be executed only the first time before the meeting starts, for a recurring session with the same participants. Said steps may be repeated once every n times the session is repeated with the same participants, so that new updates for selections may be retrieved. In this context, "n" is selected from 2 to 8, preferably 3 to 7, and even more preferably 4 to 6.

The method according to the present invention may leverage artificial intelligence (AI) to convert spoken words into video clips in real time. The duration of these clips may be designed to be flexible, even in a customizable manner: long enough to capture the essence of the content being presented, yet short enough to maintain the natural flow of the conversation. By utilizing programs like Gen-2 by Runway or Google's Imagen Video, which can generate video content from text descriptions or spoken words, the inventive system may automatically create relevant video content based on the conversation of the communication session. This approach ensures that even if the active participant/presenter may lack the necessary content for screen sharing, or bandwidth constraints make it impractical, AI-generated visualizations can effectively support the explanation without interrupting the session's rhythm. The present invention is also beneficial for mobile users which may hold a small device that cannot be used for screen sharing.

According to the invention, a method for enhanced information broadcasting is provided, the method comprising the steps of: requesting, by a conference server, selection information from one or more participants of a communication session; sending, by a client, selection information from the one or more participants to the conference server; starting, by a presenter, a communication session; creating, by the conference server, a sorted list of selections for each participant; feeding, by the conference server, the first item of the selection information to an artificial intelligence (AI) module; generating, by the Al module, tailored visualizations for the one or more participants, respectively; delivering, by the conference server, the tailored visualizations to the respective participants. Optionally, the discussion context may be fed to the Al module by the conference server.

According to a preferred embodiment, the visualization(s) is/are a video, a video clip or a video stream.

According to another preferred embodiment, the selection information is selected from aesthetic selections, calendar data, state, hardware capabilities, configuration data, location data.

In the meaning of the present invention, the term "location data" refers to the IP address of the devices of the participants if they are not connected on a virtual private network (VPN). This may give an indication of the cultural selections of the place that a participant resides.

In the meaning of the present invention, the term "state" refers to the state of the respective participant like absent, available, busy, mobile. For example, the state "mobile" may indicate that the participant has a very limited time window to watch, e.g., only reels of 5 to 10 sec.

According to still another preferred embodiment, the method further comprises: reviewing, by the one or more participants, the generated visualizations; analyzing, by the conference server, the feedback from the one or more participants.

Further, according to a preferred embodiment, feedback is selected from expression, audio feedback, sentiment.

According to yet another preferred embodiment, the method further comprises: changing, by the conference server, the aesthetics of the respective visualization(s), in case the feedback from one or more participants is negative; repeating the steps of creating a sorted list of selections for each participant, feeding the first item of selections to the Al module, generating tailored visualizations for each participant; reviewing the generated visualizations by the participants, analyzing the participant's feedback.

Yet, according to another preferred embodiment, the method further comprises: condensing, by the conference server, the remaining content, in case the duration of the visualization(s) is not appropriate; repeating the steps of creating a sorted list of selections for each participant, feeding the first item of selections to the Al module, generating tailored visualizations for each participant; reviewing the generated visualizations by the participants, analyzing the participant's feedback.

In the meaning of the present invention, the term "remaining content" refers to the content of the generated video that exceeds the duration threshold that meets the requirements for a certain participant. For example, a video of 5 min is generated for a participant and he/she only watches the first minute. If the user must leave the communication session in 3 min, he/she is not able to watch the rest of the video. In this case, the rest of the information may be condensed into a new video which fits the time window remaining for said participant.

In another preferred embodiment, the duration of the visualization(s) is in the range of 5 to 60 sec, preferably 10 to 40 sec, and even more preferably 10 to 20 sec.

According to still another preferred embodiment, the method further comprises: adapting, by the conference server, the resolution and/or quality of the respective visualization(s), in case the device is changed by one or more participants, repeating the steps of creating a sorted list of selections for each participant, feeding the first item of selections to the Al module, generating tailored visualizations for each participant; reviewing the generated visualizations by the participants, analyzing the participant's feedback.

According to another preferred embodiment, the device is selected from a desktop computer, a laptop, a tablet, and a smartphone.

Further, according to another preferred embodiment, the tailored visualization(s) is/are generated for each participant individually based on the user's preferences and discussion context.

According to yet another preferred embodiment, the visualization(s) is/are delivered to all or to certain participants.

According to another aspect of the invention, a system for enhanced information broadcasting is provided, the system being configured to perform the method for enhanced information broadcasting in communication sessions.

According to a preferred embodiment, the system comprises a conference server, a database, one or more clients and an Al module.

According to another preferred embodiment, the Al module is a generative Al (GenAl) module and/or a transcription engine. Optionally, the Al module may be designed as a GenAl module, a transcription engine or both together.

According to yet another preferred embodiment, the conference server is configured so that the one or more clients can connect to it.

It has also to be noted that aspects of the invention have been described with reference to different subject matters. In particular, some aspects or embodiments have been described with reference to a system, whereas other aspects have been described with reference to methods. However, a person skilled in the art will gather from the above and the following description that, unless otherwise noted, in addition to any combination between features belonging to one type of subject-matter also any combination between features relating to different types of subject-matter is considered to be disclosed with this text. In particular, combinations between features relating to the systems and features relating to the methods are considered to be disclosed. In addition, features relating to one of the embodiments may be combined with other features of another embodiment, the drawings or the claims, where possible. The invention and embodiments thereof will be described below in further detail in connection with the drawing(s).

### BRIEF DESCRIPTION OF THE DRAWING FIGURES

A more complete understanding of exemplary embodiments of the present disclosure can be derived by referring to the detailed description and claims when considered in connection with the following illustrative figures.
Fig. 1 shows a schematic illustration of a method for enhanced information broadcasting according to an embodiment of the invention;
Fig. 2 shows a flowchart of a method for enhanced information broadcasting according to another embodiment of the invention;
Fig. 3 shows a schematic illustration of a method for enhanced information broadcasting according to another embodiment of the invention;
Fig. 4 shows a schematic illustration of a method for enhanced information broadcasting according to yet another embodiment of the invention;
Fig. 5 shows a flowchart of a method for enhanced information broadcasting according to still another embodiment of the invention.

It will be appreciated that elements in the figures are illustrated for simplicity and clarity and have not necessarily been drawn to scale. For example, the dimensions of some of the elements in the figures may be exaggerated relative to other elements to help improve understanding of illustrated embodiments of the present disclosure.

### DETAILED DESCRIPTION OF EXEMPLARY EMBODIMENTS

Although certain embodiments and examples are disclosed below, it will be understood by those in the art that the invention extends beyond the specifically disclosed embodiments and/or uses of the invention and obvious modifications and equivalents thereof. Thus, it is intended that the scope of the invention disclosed should not be limited by the particular disclosed embodiments described below.

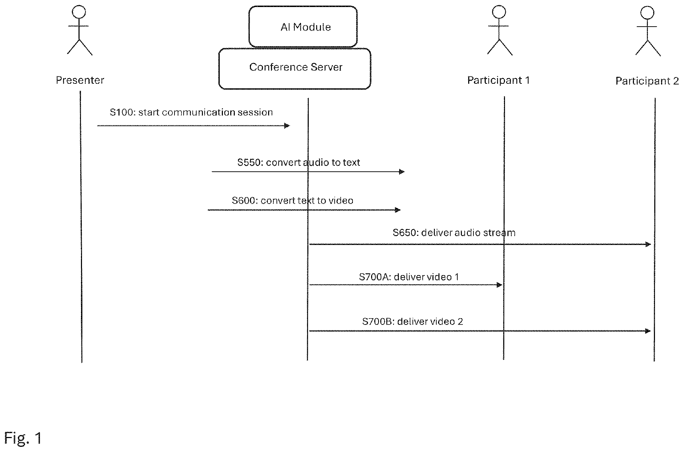

Figure 1 schematically shows in a schematic illustration the steps of the method for enhanced information broadcasting according to an embodiment of the present invention. In step S100, a presenter of a communication session may start a session. In step S550, an Al module may convert audio data of the session into text, so called STT transcription. In step S600, the text processed in step S550 is transformed into a video format by the Al module. In step S650, the conference server may deliver the audio stream to the participants of the communication session. In steps S700A and S700B, tailored video clips are delivered to the various participants of the communication session by the conference server.

Depending on the level of expertise, focus area, or role of the participants of the communication session, the Al may customize the video clips in a way that different participants receive different versions of the same video. For example, an executive stakeholder may receive a simplified version of a chart as opposed to an analyst that gets a detailed breakdown. Moreover, the participants that receive the video may request modifications if they feel that it is too simplified or too complex by giving feedback.

The presenter may control the video generation process with voice commands such as "Al show me a video representation of this process," and the system may generate the requested video clip. Gesture-based control may occur as well, wherein the presenter may draw shapes in the air, which the Al may recognize and incorporate into the video on the fly.

The generative video broadcasting according to the present invention is not limited to the host of the communication session but may be initiated by all participants of the session. For example, if a participant is trying to make a point during a session, but the Al detects uncertainty - even with facial expressions or hand gestures - a visualization may be generated and sent over to further elaborate on their sayings.

To avoid information overload, the generated video clip may be broadcasted to only some of the participants for whom the facial analysis showed confusion or interest in a specific topic.

If the conversation involves discussing real-time data such as financial metrics or performance metrics, the Al may pull in live data and integrate them into the visualizations. For example, in a discussion about company revenue, the Al may not just create a basic graph, but put in real-time data to keep the participants in-line.

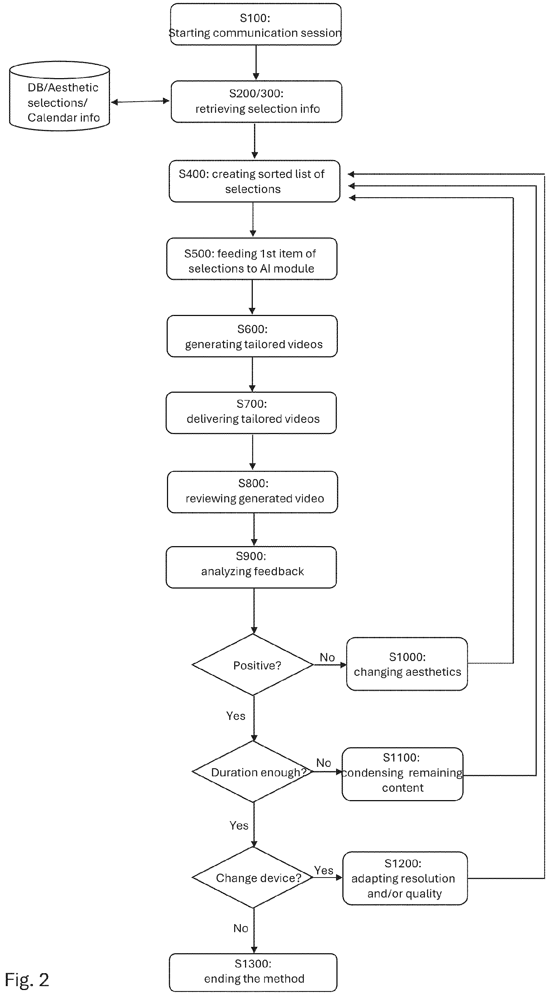

Figure 2 shows a flowchart of the steps of the method for enhanced information broadcasting according to another embodiment of the invention. In step S400 a sorted list of selections may be created by the conference server using Large Language Models (LLMs). In step S500, the first item of selections may be fed to the Al module by the conference server. In step S600, tailored versions of the audio/video content may be generated for each participant individually based on preferences and discussion context by the Al module. In step S700, the individual, tailored visualizations may be delivered to the respective participant(s). The participant(s) may review the generated visualization(s) and may give feedback (step S800). Said feedback may be analyzed in step S900 by the conference server. Feedback may be selected from face expression, audio feedback, sentiment. In case the feedback is negative, in step S1000, the aesthetics of the generated content may be changed by the Al module during live streaming and steps S400 to S900 may be repeated. If the feedback analyzed in step S900 is positive, the duration of the visualization may be checked. If the duration is not appropriate, the remaining content may be condensed to fit within the time constraints by the Al module in step S1100, and steps S400 to S900 may be repeated. If the duration of the visualization is appropriate, it may be checked whether one or more participants changed their device(s). If a change of devices took place, at step S1200 the streaming content resolution and/or quality may be adapted on the fly by the conference server and steps S400 to S900 may be repeated. If the device has not been changed, the method ends in step S1300.

Thus, for each participant of the communication session different video clips may be created. The Al module may take into account the presenter's audio plus any possible words spoken by a participant to generate the specific video clip that describes a topic. When the video is presented to the respective participant, if there is negative feedback, this may be captured by the conference server and may be fed again to the Al module which may generate a new clip based on the user's feedback. If at the end there is no valuable content for the user, the presenter may receive a message and resolve the issue directly with the respective participant.

Tailored video content creation may be used according to the present invention, based on the role, expertise or even level of confusion or engagement of the different participants, which improves the user experience of communication sessions.

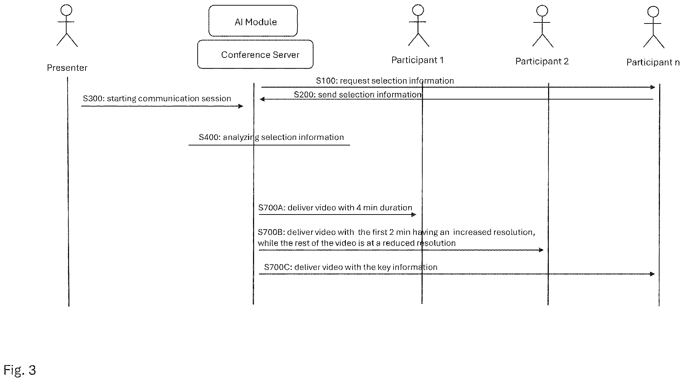

In Figure 3, a schematic illustration of another embodiment of the present invention is shown. In this setting, each user may receive a customized version of the video content tailored to their unique preferences and the discussion context. In a communication session, the conference server may request information from the participant(s) about their state, configuration and/or hardware capabilities in step S100. In step S200, the conference server may receive the requested information which are sent by the participant's clients. As was described in Fig. 1 above, at step S300, the host of the communication session may start the session. In step S400, the information received by the conference server is analyzed. The information may comprise calendar availability and participant's schedules to ensure that users receive content at the most convenient time, delivering shorter videos if the respective participants have limited time, or full-length versions during open slots of the respective participants.

In Figure 3, there are three participants, Participant 1, Participant 2 and Participant n, attending a communication session hosted by a presenter. The selection information received by the conference server regarding Participant 1 is that he/she can stay in the communication session for 5 min based on calendar data. In regard to Participant 2, the selection information received may be a calendar entry that corresponds to a subsequent meeting that Participant 2 may participate in with a second device, or the subsequent meeting may take place in a different geolocation where Participant 2 may have to walk or drive; thus, he/she may switch to a secondary, mobile, device. In Figure 3, switching to the secondary device is set to take place in 3 min wherein the secondary device has 4 gigabytes (GB) of Random-Access Memory (RAM) and lower screen resolution. With regard to Participant n, the conference server receives the information that he/she may receive a priority call in 7 min also based on calendar data. Due to this information regarding the different participants, the Al module may generate tailored videos for each participant, respectively (not shown). In step S700, the conference server may thus deliver a video to Participant 1 which is 4 min long as he/she has another entry in his/her calendar after 5 min of the start of the session, a video to Participant 2 wherein the first 2 min features an increased resolution, while the rest of the video may be at a reduced resolution, targeting the device with limited resources. For Participant n, a video may be generated that prioritizes the important parts of the session to ensure that the participant receives the key information before joining the other call.

Additionally, content may be localized based on the user's language. The server may receive the user's language settings or geographic location and provide tailored versions of the video, such as automatically generated subtitles, voiceovers, or even localized visual elements, making the experience more accessible and engaging. Moreover, language customization may go beyond translation. It may adapt to regional dialects, cultural references, and communication styles. In addition, grammar from each user may be fed to the Al module, according to different use cases. For example, a video shown to a user in Spain might differ slightly from the version delivered to a user in Mexico, reflecting localized expressions and terminology. This dynamic language adaptation according to the invention ensures that users not only understand the content but feel that it is relevant and personalized to their linguistic and cultural background.

In a vertical industry like healthcare setting, language customization may tailor communication based on the audience's expertise. For patients, the present invention may simplify complex medical jargon, explaining terms like "myocardial infarction" as "a heart attack caused by a blocked artery" to ensure comprehension. Meanwhile, for healthcare professionals, such as doctors or specialists, the content may include technical language, using precise terms like "ischemic heart disease" etc. This approach ensures that information is accessible to patients while remaining technically accurate for medical professionals.

Further customizations may be made depending on the device being used and on relevant hardware limitations. For users switching from a high-resolution corporate desktop to a mobile device during the meeting, the video may automatically adapt in quality and format to fit the screen size and to optimize bandwidth usage. An alternative may be to deliver the video in parts. For example, the first 2 min may be in high resolution and the rest in lower resolution.

More advanced options may even customize video content based on biometric data, such as eye-tracking to enhance focus on relevant sections or based on the level of excitement/anger shown during the presentation, with the aim to improve the end-users' experience.

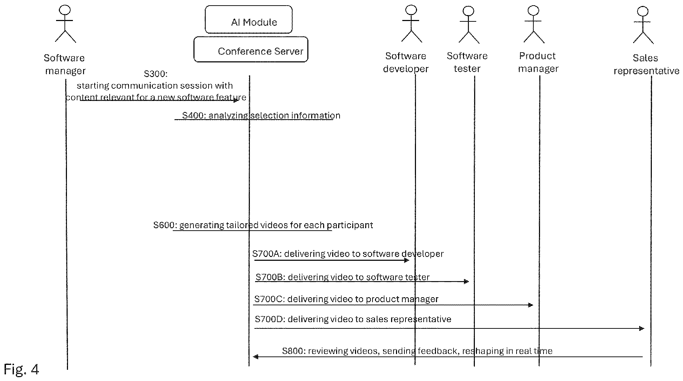

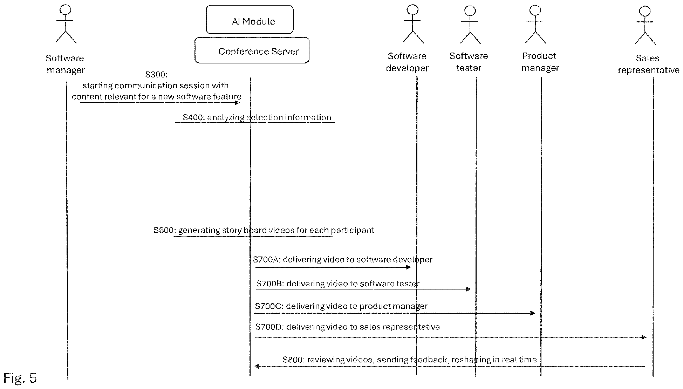

Figures 4 and 5 show schematic illustrations of further embodiments of the present invention regarding segmentation of the content of communication sessions.

Figure 4 shows an embodiment wherein different versions of the generated video may be received by the individual participants, targeting the distinct roles of the participants. The generated videos may be adapted in a way that tackles different aspects of the role of each participant. In the embodiment depicted in Figure 4, a board of experts with different roles may discuss the development of a new software feature. The software manager is the host of the session and starts said session at step S300. In step S100, the conference server may request information about the various participants (not shown). Said information may be selected from aesthetic selections, calendar data, state, configuration, location data and/or hardware capabilities. The selection information received may be analyzed by the conference server in step S400. In the present example, the software developer needs a video that on top of the discussed context answers a question that was raised during the session about the technologies that will be used in the development process. The duration of said video may be set to 5 min. The software tester may need a video with instructions on how to test the new functionality; the duration of said video may be set to 10 min. In addition, as the software tester is on a mobile device, the quality of the video may be adapted to the mobile devices' quality. The product manager may want a video with details on the time plan of the development and the associated development costs. Further, the sales representative may have only 2 mins to watch a video based on his/her calendar data. Thus, a tailored video may be created which fits the time schedule and features market data and data of the competitors. In step S700, tailored videos may be generated for the respective participants based on their needs according to the analysis as depicted above and sent to the respective participants. In step S800, the various participants may review the videos and may send their feedback to the conference server. If the feedback is negative, the videos may get reshaped in real time.

For each participant, the aesthetic preferences during a real time communication session may be considered. By analyzing the audio and/or video stream of the participant that receives a generated tailored video, one more characteristic that may affect the result may be injected. If, for example, the sales representative selects certain background colors or themes, those could be used to trigger the creation of a video with similar aesthetic characteristics. This may apply for every device and the different roles of the users that participate in a communication session.

Further, as already depicted above, it may be necessary to condense the communicated information and deliver a shorter video that captures the essential parts of the discussion due to other appointments or meetings which are scheduled in the calendar of the respective participant(s).

Figure 5 shows another embodiment of the present invention, wherein a storyboard video format is incorporated. Using the same business scenario as depicted in Figure 4, video storyboards may be created by the Al module. The method steps of Figure 5 are as depicted in Figure 4.

Different to Figure 4, based on the discussion context, a list of stories with priority for each of the associated roles of the participants may be created. Said stories may get prioritized for each role of the participants by the conference server based on the roles which are retrieved from the system. To save resources of the Al module, according to the invention, k% of the most desired stories may get generated instead of generating all stories for a role/participant. Thus, there may be concentration on the first m stories.

In the meaning of the present invention, the variable "m" represents the number of stories that are the focus of priority. It may be selected from 1- 10, preferably 2-7, most preferably 2-5.

In the meaning of the present invention, the variable "k%" is selected from 30 to 60%, preferably 30 to 50%, most preferably 30 to 45%.

For example, three stories for the software tester may be created, and the story that gives the information on how to test the new software feature may get prioritized into the first position. Said story video may last 2 min. Then the next two stories may be related to generic information on the new software feature and may have a duration of 1.5 and 1.5 min, respectively. Thus, the complete video may have a duration of 5 min.

However, it is also possible to only generate the first prioritized story video instead of the complete series of three videos because the software tester may have shown interest specifically in instructions on how to test the software feature, so the rest of the stories may be requested on demand. Using this approach, resources are saved because only a few of the stories may get generated and not the complete series.

By using the storyboard format, the generated video may be split into parts-stories with certain priority for a specific role of the respective participant(s). A type of indexing system may be created which helps to traverse video scenes faster. Thus, the user may navigate directly to the sub-video that he/she is interested in, saving time searching certain pieces of information on a long video. In addition, by prioritizing the scenes, it may be possible that k out of m scenes are generated to save resources from the Al module. For example, a video may be separated into 5 scenes-stories and the user is interested only in the first 2 stories, the remaining stories may not have to be generated beforehand, but only on demand.

Thus, according to the present invention, videos may be generated based on relevant meeting topics maximizing focus on content that directly impacts the role of the respective participant(s). On that account, according to the present invention, video content may be generated related to the users' role, omitting parts that are most probably of no interest to them. For example, in a corporate meeting regarding the upcoming release of a product, it may be seen that firstly the sales associate may receive a video in the form of a reel, precisely tailored in length to match their available time based on their calendar information, and secondly, they may receive content about market data and competitive analysis. In parallel, a software developer that is more interested in the technologies they may use during development may receive a video that is focused on this topic.

Also, according to the present invention, video customizations may be done with the format and the quality of the generated video. The whole content may be split into logical entities or "stories". Each story may be ranked by relevance for different roles of the participants, so that users may focus on what's most impactful for them. Stories above a certain interest score may be auto generated into videos, ready to view upon request, while less relevant stories may remain as listed summaries, saving processing resources. In this aspect, instead of a compressed, single video reel (as depicted in Figure 4), this approach offers separate story segments. Users can directly access specific stories based on need, reducing content overload and enabling quick navigation to the most relevant points (see Figure 5).

In addition, according to the present invention, video content may be generated that adapts to the user's unique aesthetic preferences. Unlike standard video creation methods in the art which produce generic outputs, the present invention personalizes visual elements to align with the user's aesthetic profile.

Further, the present invention may be especially valuable during a conference call when the user who is actively speaking may not have the capability to share their screen or video stream. The invention makes sure that the flow of the conversation remains visually engaging and informative to all participants.

The present invention may also be applied in communication session scenarios wherein a participant does not have the capability to share a stream, screen and/or video. In this case the inventive method offers an approach to generate video content using only the device's audio stream, by personalizing the content using the aspects mentioned above.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

The example embodiments of the disclosure described above do not limit the scope of the invention, since these embodiments are merely examples of the embodiments of the invention. Any equivalent embodiments are intended to be within the scope of this invention. Indeed, various modifications of the disclosure, in addition to those shown and described herein, such as alternative useful combinations of the elements described, may become apparent to those skilled in the art from the description. Such modifications and embodiments are also intended to fall within the scope of the appended claims.

### Reference numerals

| | | |
|---|---|---|
| 1 | ML | Machine Learning |
| 2 | STT | speech-to-text |
| 3 | Al | Artificial Intelligence |
| 4 | LLM | Large Language Models |
| 5 | GB | gigabyte |
| 6 | min | minute |
| 7 | RAM | Random-Access Memory |
| 8 | S100 to S1300 | method steps |
| 9 | GenAl | Generative Artificial Intelligence |
| 10 | VPN | Virtual Private Network |
| 11 | sec | second* * * |

## Claims

1. A method for enhancing information broadcasting, wherein the method comprises the steps of:
requesting, by a conference server, selection information from one or more participants of a communication session;
sending, by a client, selection information from the one or more participants to the conference server;
starting, by a presenter, a communication session;
creating, by the conference server, a sorted list of selection information for each participant;
feeding, by the conference server, the first item of the selection information to an artificial intelligence, Al, module;
generating, by the Al module, tailored visualizations for the one or more participants, respectively; and
delivering, by the conference server, the tailored visualizations to the respective participants.

2. The method according to claim 1, wherein the tailored visualizations are a video, a video clip or a video stream.

3. The method according to claim 1 or claim 2, wherein the selection information is selected from aesthetic selections, calendar data, state, hardware capabilities, configuration data.

4. The method according to any of claims 1 to 3, wherein the method further comprises: reviewing, by the one or more participants, the generated visualizations and optionally wherein feedback is selected from expression, audio feedback, sentiment.

5. The method of claim 4, further comprising analyzing, by the conference server, feedback from the one or more participants, if there is any feedback.

6. The method of claim 5, further comprising ending the method, in case the feedback of the at least one participant is positive, the duration of the visualization is long enough, and no changing of a device by the at least one participant takes place.

7. The method according to any of claims 4 to 6, wherein the method further comprises: changing, by the conference server, the aesthetics of the respective visualization(s), in case the feedback from one or more participants for said video is negative; and repeating the steps of creating, feeding, generating, delivering, reviewing, and analyzing.

8. The method according to any preceding claim, wherein the method further comprises:
condensing, by the conference server, the remaining content, in case the duration of the visualization is not appropriate; and
repeating the steps of creating, feeding, generating, delivering, reviewing, and analyzing.

9. The method according to any preceding claim, wherein the method further comprises:
adapting, by the conference server, the resolution and/or quality of the respective visualization(s), in case the device has been changed by one or more participants; and repeating the steps of creating, feeding, generating, delivering, reviewing, and analyzing and optionally wherein the device is selected from a desktop computer, a laptop, a tablet, and a smartphone.

10. The method according to any preceding claim, wherein the tailored visualizations are generated for each participant based on participants' preferences and discussion context and/or wherein the tailored visualizations are delivered to all or to certain participants.

11. A system for enhancing information broadcasting, wherein the system is configured to perform the method for enhancing information broadcasting according to any of claims 1 to 10.

12. The system according to claim 11, wherein the system comprises:
- a conference server,
- a data base;
- one or more clients; and
- an Al module.

13. The system according to claim 12, wherein the Al module is a generative Al, GenAl, module and/or a transcription engine and/or wherein the conference server is configured so that the one or more clients can connect to it.

14. A method for enhancing information broadcasting, wherein the method comprises the steps of:
requesting, by a conference server, selection information from one or more participants of a communication session;
sending, by a client, selection information from the one or more participants to the conference server;
starting, by a presenter, a communication session;
creating, by the conference server, a sorted list of selection information for each participant;
feeding, by the conference server, the first item of the selection information to an artificial intelligence, Al, module;
generating, by the Al module, tailored visualizations for the one or more participants, respectively;
delivering, by the conference server, the tailored visualizations to the respective participants
reviewing, by the one or more participants, the generated visualizations;
analyzing, by the conference server, feedback from the one or more participants, if there is any feedback; and
ending the method, in case the feedback of the at least one participant is positive, the duration of the visualization is long enough, and no changing of devices by the at least one participant takes place,
wherein the selection information is selected from aesthetic selections, calendar data, state, hardware capabilities, configuration data.

15. The method according to claim 14, wherein feedback is selected from expression, audio feedback, sentiment, and optionally wherein the method further comprises:
changing, by the conference server, the aesthetics of the respective visualization(s), in case the feedback from one or more participants for said video is negative; and
repeating the steps of creating, feeding, generating, delivering, reviewing, and analyzing.
